Europäisches Patentamt

European Patent Office

Office européen des brevets

(19)

(11) Veröffentlichungsnummer : **0 142 821**
**B1**

(12) # EUROPÄISCHE PATENTSCHRIFT

(45) Veröffentlichungstag der Patentschrift :
06.05.87

(51) Int. Cl.⁴ : **B 03 B   5/56**, A 23 N 12/02

(21) Anmeldenummer : 84113756.5

(22) Anmeldetag : 14.11.84

(54) Trommelsteinefänger mit Abstreifer.

(30) Priorität : 21.11.83 DE 3341931

(43) Veröffentlichungstag der Anmeldung :
29.05.85 Patentblatt 85/22

(45) Bekanntmachung des Hinweises auf die Patenterteilung : 06.05.87 Patentblatt 87/19

(84) Benannte Vertragsstaaten :
BE DE FR GB IT

(56) Entgegenhaltungen :
DE-B- 1 277 170
DE-C-   253 618
FR-A- 2 250 575
GB-A-   660 948
GB-A-   922 500
US-A- 3 035 698
US-A- 3 140 995
US-A- 4 187 172

(73) Patentinhaber : Gerlach, Hildburg
In den Wiesen 8
D-2730 Zeven (DE)

(72) Erfinder : Gerlach, Günter
verstorben
(DE)

(74) Vertreter : Bolte, Erich, Dipl.-Ing. et al
c/o Meissner, Bolte & Partner Patentanwälte Hollerallee 73
D-2800 Bremen 1 (DE)

## Beschreibung

Die Erfindung betrifft eine Vorrichtung gemäß dem Oberbegriff des Patentanspruches 1.

Eine derartige Vorrichtung zum Trennen von Steinen und (Zucker-) Rüben im Schwemmstrom einer Rübenzuckerfabrik ist durch die US-A 4 187-172 beschrieben. Der Steinefangring ist bei dieser bekannten Vorrichtung im Bereich der Eingangsseite der Siebtrommel angeordnet. Bekannt ist aber auch bereits eine Vorrichtung dieser Art, bei der sowohl an der Eingangsseite wie auch an der Austrittsseite der Siebtrommel je ein Steinefangring angebracht ist (DE-B-31 19 484).

Bei den vorgenannten bekannten Vorrichtungen (Trommel-Steinefänger) ist die Siebtrommel an der Innenseite wie auch an der Außenseite mit einer Förderschnecke versehen. Durch die außenliegende Förderschnecke wird Sand, welcher sich im Bereich zwischen der Siebtrommel und dem äußeren Gehäuse ansammelt, zum Steinefangring gefördert.

Bei den vorgenannten, bekannten Steinefängern besteht ein Nachteil darin, daß die Siebtrommeln sich nach einer gewissen Einsatzzeit mit Fasern (Rübenschwänze, Rübenbruchstücke, Kraut, Unkraut etc.) zusetzen. Um die Steinefänger funktionsfähig zu halten, ist es erforderlich, deren Betrieb von Zeit zu Zeit zu unterbrechen und die Siebtrommel zu reinigen, beispielsweise mit Hochdruck-Wasserdüsen. Dieser Reinigungvorgang ist zeitaufwendig und wegen der Betriebsunterbrechung nachteilig.

Der DE-B-12 77 170 läßt sich die Anordnung von Abstreifern an der Innenseite eines Schaukelsiebes entnehmen. Durch die innenseitig angeordneten Abstreifer werden jedoch die genannten Verunreinigungen, wie z. B. Rübenkraut, Zuckerrübenschwänze oder dergleichen, regelrecht in die Sieböffnungen hineingepreßt, wodurch nach kürzester Zeit das Sieb verstopft. Die innenseitig angeordneten Abstreifer wirken nämlich in Richtung der Strömung durch das Schaukelsieb hindurch.

Der Erfindung liegt die Aufgabe zugrunde, eine Vorrichtung der im Oberbegriff des Patentanspruches 1 genannten Art dahingehend weiterzuentwickeln und zu verbessern, daß bei einem einfachen Aufbau eine zuverlässige Betriebsweise gewährleistet, insbesondere ein Zusetzen bzw. Verstopfen des Mantels der Siebtrommel wirkungsvoll vermieden wird.

Diese Aufgabe wird erfindungsgemäß durch die kennzeichnenden Merkmale des Patentanspruches 1 gelöst.

Durch die erfindungsgemäße Anordnung des Abstreifers an der Außenseite der Siebtrommel schiebt dieser durch die Löcher der Liebtrommel nach außen durchstehende Teilchen wieder in das Trommelinnere zurück, so daß sie vom Wasserstrom weiter- bzw. fortgeschwemmt werden können. Somit wird wirkungsvoll einer vorzeitigen Verstopfung der Siebtrommel entgegengewirkt.

Des weiteren lassen sich durch die erfindungsgemäße Ausbildung der Schöpftaschen Sand und kleine Steine, die in dem Bereich außerhalb der Siebtrommel gelangen, wirkungsvoll beseitigen. Die dafür vorgesehenen, sich in Längsrichtung der Siebtrommel achsparallel zu dieser erstreckenden Schöpftaschen-Erweiterungen sind so gestaltet, daß zwischen den Taschenerweiterungen und dem Mantel der Siebtrommel ein Zwischenraum gebildet ist, in dessen Bereich der erwähnte Abstreifer ungehindert wirksam sein kann. Durch diese einfache Maßnahme kann die Anordnung einer Förderschnecke an der Außenseite einer Siebtrommel vermieden werden, die dem erfindungsgemäß vorgesehenen Abstreifer ohnehin hindernd entgegenstünde.

Konstruktive Details der Erfindung sind in den Unteransprüchen beschrieben.

Nachstehend wird ein bevorzugtes Ausführungsbeispiel der Erfindung.

Ein Ausführungsbeispiel der Erfindung wird nachfolgend anhand der Zeichnungen näher erläutert. Es zeigt :

Figur 1 Ein Ausführungsbeispiel eines Steinefängers im schematischen Längsschnitt,

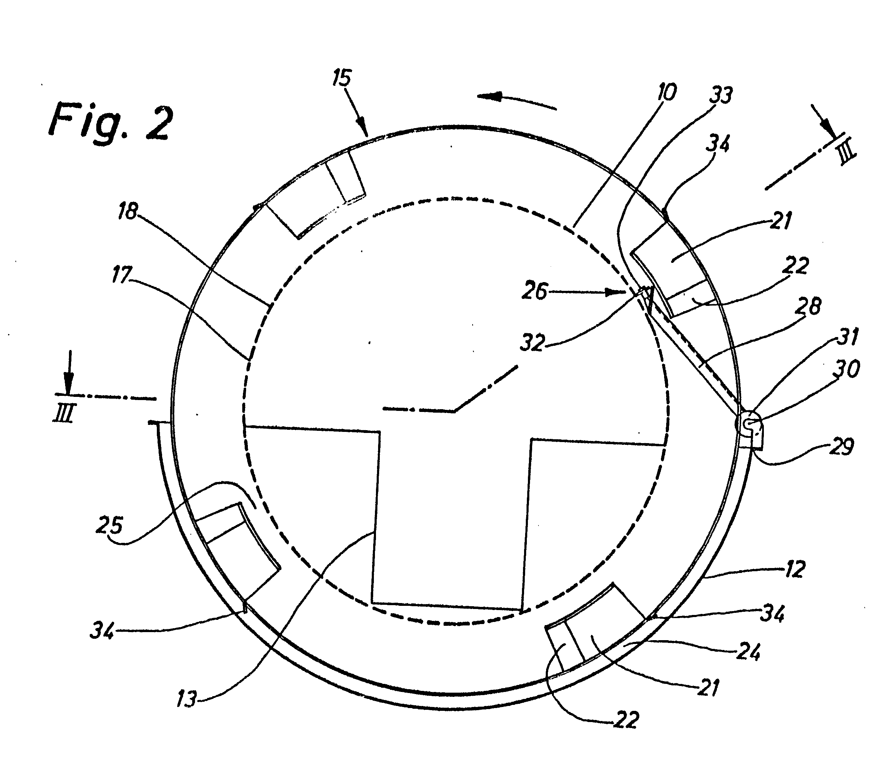

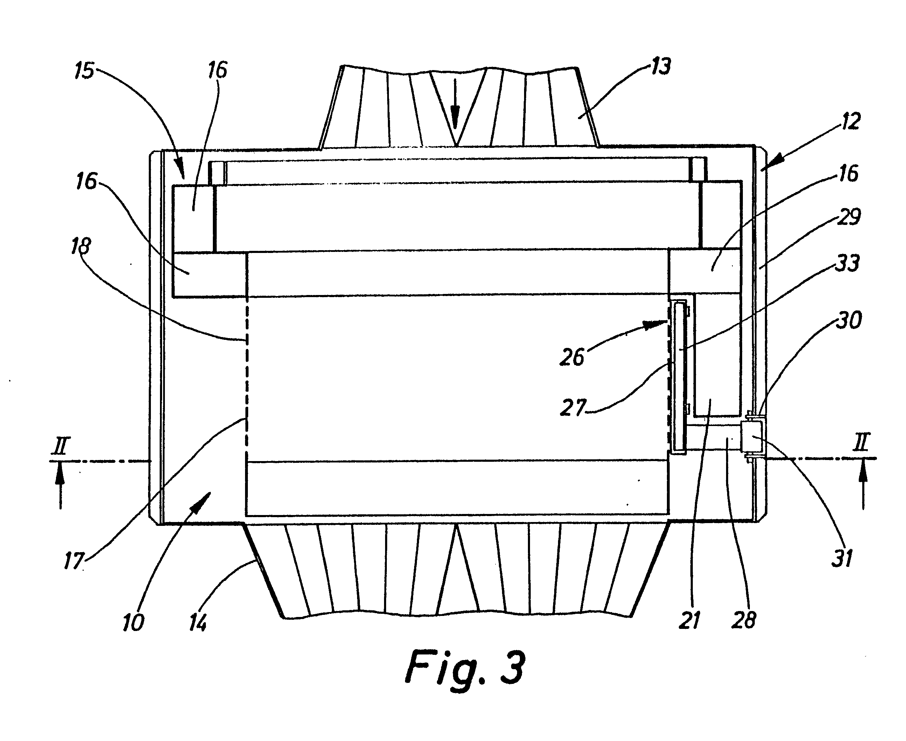

Figur 2 einen Querschnitt durch den Steinefänger gem. Fig. 1 im Querschnitt II-II der Fig. 3,

Figur 3 einen Längsschnitt in der Ebene III-III der Fig. 2.

Der in den Zeichnungen dargestellte Steinefänger ist in einen Schwemmstrom einer Rübenzuckerfabrik eingebaut. Der Schwemmstrom läuft in einem Kanal und besteht aus einem Gemisch von Wasser, Rüben, Steinen, Sand, Kies, Kraut und sonstigen Faserbestandteilen. Die dargestellte Vorrichtung hat die Aufgabe, Steine aus dem Schwemmstrom abzusondern. Dieser wird deshalb in Längsrichtung durch die Vorrichtung (Steinefänger) hindurchgeleitet.

Der gezeigte Steinefänger besteht aus einer Siebtrommel 10, die über Achsen bzw. Achszapfen 11 drehbar gelagert ist. Die Siebtrommel 10 erstreckt sich mit ihrer Längsachse in Strömungsrichtung des Schwemmstroms. Die Siebtrommel 10 ist in einem feststehenden äußeren Gehäuse 12 gelagert, welches bei dem vorliegenden Ausführungsbeispiel als oben offene Schale ausgebildet ist. Die Abmessungen dieses schalenförmigen Gehäuses 12 sind derart, daß mehr als die Hälfte der Siebtrommel 10 oben herausragt.

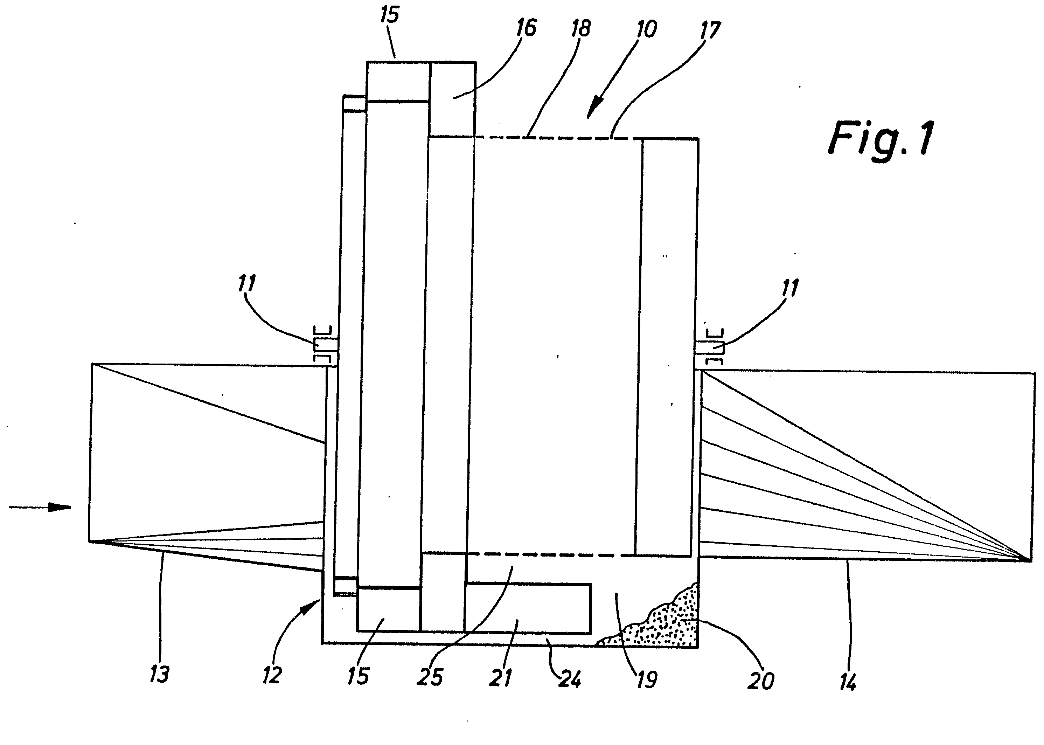

An der Eintrittsseite (in Fig. 1 links) sowie an der Austrittsseite des Gehäuses 12 ist jeweils ein Schwemmstromanschluß 13 bzw. 14 angebracht. Diese bilden die Fortsetzung des Schwemmstromkanals zur Einleitung des Schwemmstroms in den Steinefänger und aus diesem heraus.

Bei dem vorliegenden Ausführungsbeispiel ist die Siebtrommel 10 an ihrer Eintrittsseite mit einem Steinefangring 15 versehen. Dieser ist als eintrittsseitige Fortsetzung bzw. als Teil der Siebtrommel 10 mit dieser verbunden und läuft mit um. Der Steinefangring 15 ist prinzipiell in bekannter Weise ausgebildet, etwa wie in der US-PS 41 87 172 dargestellt, oder gemäß DE-PS 31 19-484. Der Steinefangring 15 hat demnach einen größeren Innendurchmesser und auch einen größeren Außendurchmesser als die Siebtrommel 10.

Dem Steinefangring 15 sind seitlich anschließende Schöpftaschen 16 zugeordnet. Mehrere derartiger Schöpftaschen 16 sind in Umfangsrichtung mit gleichen Winkelabständen voneinander angeordnet. Jede Schöpftasche nimmt bei entsprechender Relativstellung während der Drehung Wasser aus dem Schwemmstrom bzw. aus dem Gehäuse 12 auf und leitet dieses seitlich in den Steinefangring 15. Dieser ist mit einer entsprechenden Anzahl von Öffnungen (nicht gezeigt) versehen, durch die das Wasser radial nach innen strömt und einen Auftrieb erzeugt. Entgegen diesem Auftrieb sinken die Steine in den Steinefangring 15, während die Rüben etc. durch den Auftrieb zurückgehalten und in der Siebtrommel 10 abgefördert werden.

Wasser des Schwemmstroms wird im Bereich eines mit Löchern 17 versehenen Mantels 18 der Siebtrommel 10 unten abgeleitet in eine teilringförmige Kammer 19 zwischen der Siebtrommel 10 und dem Gehäuse 12. Im Bereich dieser Kammer sammeln sich auch Feststoffpartikel, insbesondere Sand 20, der durch die Löcher 17 des Mantels 18 nach unten gelangt.

Die Schöpftaschen 16 sind in besonderer Weise ausgebildet, nämlich mit seitlich in Längsrichtung der Siebtrommel 10 anschließenden Taschenerweiterungen 21. Jede dieser Taschenerweiterungen 21 ist als im wesentlichen rechteckiger Behälter ausgebildet mit einer schräg in Richtung zur Schöpftasche 16 bzw. zum Steinefangring 15 abfallenden Bodenwand 22. Gegenüberliegend hierzu ist die Taschenerweiterung 21 offen unter Bildung einer Wassereintrittsöffnung 23. Diese liegt in Drehrichtung der Siebtrommel bzw. der Schöpftaschen 16 vorn, so daß über die Taschenerweiterungen 21 im Bereich des Gehäuses 12 bzw. des Wasserspiegels Wasser über die Taschenerweiterungen 21 den Schöpftaschen 16 und sodann dem Steinefangring 15 zugeführt wird. Die Taschenerweiterung 21 erstreckt sich nahezu über die volle Länge des mit Löchern 17 versehenen Mantels 18. Gegenüber dem Gehäuse 12 wird ein verhältnismäßig enger Spalt 24 gebildet, während zwischen der Taschenerweiterung 21 und dem Mantel 8 der Siebtrommel 10 ein größerer Zwischenraum 25 vorgesehen ist.

Der Siebtrommel 10 bzw. dem Mantel 18 ist bei dem gezeigten Ausführungsbeispiel ein Abstreifer 26 zugeordnet. Der Abstreifer 26 erstreckt sich in Längsrichtung der Siebtrommel 10, also achsparallel. Eine elastische Abstreifkante 27 liegt am Außenumfang des Mantels 18 an, und zwar über die volle Länge desselben. Durch den Abstreifer werden etwaige Feststoffteile, insbesondere faserige Güter, die sich in den Löchern 17 festsetzen bzw. durch diese teilweise hindurchtreten, beseitigt, so daß die Löcher 17 des Mantels 18 stets frei sind.

Der Abstreifer 26 ist in Radialrichtung so bemessen, daß seine Konstruktionsteile in dem Zwischenraum 25 zwischen der Taschenerweiterung 21 und dem Mantel 18 Platz finden. Die Siebtrommel 10 kann sich deshalb mit dem Steinefangring und den Schöpftaschen 16 frei drehen, ohne daß die Taschenerweiterungen 21 mit dem Abstreifer 26 kollidieren.

Der Abstreifer 26 ist im vorliegenden Fall über einem am Ende, also außermittig, angebrachten Tragarm 28 gelagert, nämlich mit dem Gehäuse 12 verbunden. Auf einem oberen Längsrand 29 des Gehäuses 12 ist ein Schwenklager 30 für den Abstreifer 26 bzw. den Tragarm 28 angebracht. Im vorliegenden Fall ist der Tragarm 28 über eine Gummi-Torsionsbuchse 31 gelagert. Diese überträgt eine federelastische Andrückkraft auf den Tragarm 28 und damit auf den Abstreifer 26. Die Spannung der Gummi-Torsionsbuchse 31 ist einstellbar und damit auch die Andrückkraft des Abstreifers 26 an dem Mantel 18.

Der Abstreifer 26 selbst besteht im vorliegenden Falle aus einem Streifen 32 aus elastischem Material, z. B. Kunststoff. Dieser ist zwischen beidseitigen Halteleisten 33 eingespannt. Eine Abstreiferlippe ragt zwischen den Halteleisten 33 hervor und liegt an dem Mantel 18 an.

Wenn sich in der durch das Gehäuse 12 begrenzten Kammer 19 zuviel Sand etc. sammelt, wird dieser im vorliegenden Fall durch die entsprechend ausgebildeten Taschenerweiterungen 21 mit abgefördert. Ein auf der radialäußeren Seite in Bewegungsrichtung vorn liegender Rand der Taschenerweiterung 21 als Begrenzung der Wassereintrittsöffnung 23 ist mit einem schräg abgewinkelten Mitnehmerstreifen 34 versehen, der jeweils im unteren Bereich Sand aufnimmt und in die Taschenerweiterung 21 leitet und damit über die Schöpftasche 16 in den Steinefangring 15. Auf diese Weise wird ohne die Anordnung einer sonst üblichen Förderschnecke an der Außenseite des Mantels 18 der Sand abgefördert.

An der Innenseite des Mantels 18 kann — wie an sich bekannt — eine Förderschnecke angebracht sein. Es ist aber auch möglich, zusätzlich oder alternativ an der glattflächigen Innenseite des Mantels 18 einen Abstreifer anzubringen.

**Patentansprüche**

1. Vorrichtung zum Trennen von Feststoffen unterschiedlichen spezifischen Gewichts in einem Wasserstrom (Schwemmstrom), insbesondere zum Trennen von Steinen einerseits und Hackfrüchten (Zuckerrüben) andererseits, mit einer in einem Gehäuse (12) drehbar gelagerten Siebtrommel (10), die axial vom Wasserstrom durchströmt wird, und wenigstens einem an dieser eintrittsseitig angeordneten Steinefangring (15) mit einer Mehrzahl von Schöpftaschen (16) zur Aufnahme von Wasser aus dem Schwemmstrom, dadurch gekennzeichnet, daß wenigstens ein Abstreifer (26) an der Außenseite der Siebtrommel (10) (Mantel 18) in Längsrichtung anliegt, und daß die dem Steinefangring (15) zugeordneten Schöpftaschen (16) mit seitlichen Taschenerweiterungen versehen sind, die sich in Längsrichtung der Siebtrommel (10) achsparallel zu dieser erstrecken, wobei zwischen den Taschenerweiterungen (21) und dem Mantel (18) der Siebtrommel (10) ein Zwischenraum (25) gebildet ist, in dem sich der Abstreifer (26) erstreckt.

2. Vorrichtung nach Anspruch 1, dadurch gekennzeichnet, daß der Abstreifer (26) federelastisch an der Siebtrommel (10) anliegt.

3. Vorrichtung nach Anspruch 1 oder 2, dadurch gekennzeichnet, daß der Abstreifer (26) am äußeren Gehäuse (12), insbesondere an einem oberen Längsrand (29) eines schalenförmigen Gehäuses (12) gelagert ist.

4. Vorrichtung nach einem oder mehreren der Ansprüche 1-3, dadurch gekennzeichnet, daß der Abstreifer (26) bzw. ein Tragarm (28) desselben in einer Gummi-Torsionsbuchse (31) gelagert ist.

5. Vorrichtung nach Anspruch 4, dadurch gekennzeichnet, daß der Tragarm (28) für den Abstreifer (26) außermittig angeordnet ist, nämlich neben der Taschenerweiterung (21).

6. Vorrichtung nach einem oder mehreren der Ansprüche 1-5, dadurch gekennzeichnet, daß der Abstreifer (26) elastisch ausgebildet bzw. mit einer elastischen Abstreifkante (27) versehen ist, vorzugsweise durch Anordnung eines Streifens (32) aus elastischem Werkstoff zwischen Halteleisten (33).

7. Vorrichtung nach einem oder mehreren der Ansprüche 1-6, dadurch gekennzeichnet, daß die Taschenerweiterungen (21) mit geringem Abstand an der Innenseite des Gehäuses (12) vorbeibewegbar sind und zur Aufnahme von Sand über eine Wassereintrittsöffnung (23) dienen.

8. Vorrichtung nach Anspruch 7, dadurch gekennzeichnet, daß ein freier, außenliegender Rand der Taschenerweiterung (21) einen schrägen, abgewinkelten Mitnehmerstreifen (34) aufweist.

## Claims

1. Apparatus for separating solid matter of varying specific weight in a stream of water (washing stream) in particular for separating stones on the one hand and hoed crops (sugar beet) on the other hand, with a sieve drum (10) mounted to rotate in a housing (12), through which a stream of water flows in the axial direction and at least one stone collecting ring (15) arranged thereon at the inlet side with a plurality of scoop compartments (16) for receiving water from the washing stream, characterised in that at least one stripper (26) bears against the outside of the sieve drum (10) (casing 18) in the longitudinal direction and that the scoop compartments (16) associated with the stone collecting ring (15) are provided with lateral compartment extensions, which extend in the longitudinal direction of the sieve drum (10) axis parallel thereto, in which case an intermediate chamber (25) is formed between the compartment extensions (21) and the casing (18) of the sieve drum (10) and in which the stripper (26) extends.

2. Apparatus according to claim 1, characterised in that the stripper (26) bears resiliently against the sieve drum (10).

3. Apparatus according to claim 1 or 2, characterised in that the stripper (26) is mounted on the outer housing (12), in particular on an upper longitudinal edge (29) of a shell-shaped housing (12).

4. Apparatus according to one or more of claims 1 to 3, characterised in that the stripper (26) or a support arm (28) for the latter is mounted in a rubber torsion sleeve (31).

5. Apparatus according to claim 4, characterised in that the support arm (28) for the stripper (26) is arranged eccentrically, namely beside the compartment extension (21).

6. Apparatus according to one or more of claims 1 to 5, characterised in that the stripper (26) is constructed to be resilient or is provided with a resilient stripping edge (27), preferably by providing a strip (32) of resilient material between retaining bars (33).

7. Apparatus according to one or more of claims 1 to 6, characterised in that the compartment extensions (21) can be moved past the inside of the housing (12) with a small gap and serve for receiving sand by way of a water inlet opening (23).

8. Apparatus according to claim 7, characterised in that a free, external edge of the compartment extension (21) comprises an oblique, bent entrainment strip (34).

## Revendications

1. Dispositif pour séparer des substances solides présentant des poids spécifiques différents dans un courant aqueux (courant de lavage), en particulier pour la séparation de pierres, d'une part, et des plantes sarclées (betteraves sucrières), d'autre part, comprenant un tambour cribleur (10) qui est supporté de manière à pouvoir tourner dans une enveloppe (12) et qui est traversé axialement par le courant d'eau, et au moins un anneau d'épierrage (15) qui est agencé sur ce tambour, du côté entrée, et qui présente un grand nombre de poches de puisage (16) pour recevoir l'eau provenant du courant de lavage, caractérisé en ce qu'au moins un racloir (26) est en appui sur le côté externe du tambour cribleur (10) (enveloppe 18) suivant sa direction longitudinale et en ce que les poches de puisage (16) adjointes à l'anneau d'épierrage (15) présentent des extensions latérales qui s'étendent, dans la direction longitudinale du tambour cribleur (10), parallèlement à l'axe de ce dernier, un espace intercalaire (25), dans lequel s'étend le racloir (26), étant formé entre les extensions de poche (21) et l'enveloppe (18) du tambour cribleur (10).

2. Dispositif suivant la revendication 1, caractérisé en ce que le racloir (26) est en appui de façon élastique sur le tambour cribleur (10).

3. Dispositif suivant l'une des revendications 1 et 2, caractérisé en ce que le racloir (26) est supporté sur l'enveloppe extérieure (12), en particulier sur un bord longitudinal supérieur (29) d'une enveloppe en forme de cuve (12).

4. Dispositif suivant une ou plusieurs des revendications 1 à 3, caractérisé en ce que le racloir (26) ou respectivement un bras de support (28) de ce dernier est supporté dans une douille à torsion en caoutchouc (31).

5. Dispositif suivant la revendication 4, caractérisé en ce que le bras de support (28) du racloir (26) est agencé de manière excentrique, c'est-à-dire à côté de l'extension de poche (21).

6. Dispositif suivant une ou plusieurs des revendications 1 à 5, caractérisé en ce que le racloir (26) est réalisé sous une forme élastique ou respectivement présente un bord de raclage élastique (27), de préférence par disposition d'une bande (32) en matériau élastique entre des lattes de fixation (33).

7. Dispositif suivant une ou plusieurs des revendications 1 à 6, caractérisé en ce que les extensions de poche (21) sont déplaçables à une faible distance de la face interne de l'enveloppe (12) et en ce qu'elles servent à recevoir du sable par l'intermédiaire d'une ouverture d'entrée d'eau (23).

8. Dispositif suivant la revendication 7, caractérisé en ce qu'un bord libre, situé à l'extérieur, des extensions de poche (21) présente une bande d'entraînement (34) repliée de façon inclinée.

Fig.1

0 142 821

Fig. 2

0 142 821

Fig. 3